# EUROPEAN PATENT APPLICATION

(11) **EP 1 093 104 A1**
(43) Date of publication of application: **18.04.2001**
(21) Application number: 00913019.6
(22) Date of filing: 31.03.2000
(51) Int. Cl.: G09C 5/00, G10L 21/00, H04N 1/387, H03M 7/30

(54) **METHOD AND APPARATUS FOR SIGNAL PROCESSING**

(30) Priority: 31.03.1999 JP 9357099
(71) Applicant: Sony Corporation, Tokyo 141-0001 (JP)
(72) Inventor: EZAKI, Tadashi, Sony Corporation, Shinagawa-ku, Tokyo 141-0001 (JP); IGA, Akira, Sony Corporation, Shinagawa-ku, Tokyo 141-0001 (JP); SATO, Hideo, Sony Corporation, Shinagawa-ku, Tokyo 141-0001 (JP)
(74) Representative: Pratt, Richard Wilson
(86) International application number: JP0002073
(87) International publication number: WO0058928

(57) **Abstract**

The present invention relates to a signal processing apparatus and method that is effective in protecting the copyright of a digital signal.

More specifically, the present invention provides a signal processing apparatus for detecting whether or not a digital signal has been subjected to a compression process, the signal processing apparatus being characterized by including storage means for storing a first amount of information used as a reference for detecting whether or not a digital signal with electronic watermarking information embedded therein has been subjected to the compression process, the first amount of information being the amount of the electronic watermarking information, extraction means for extracting the electronic watermarking information contained in digital signal to be detected; and detection means for detecting a second amount of information that is the amount of the electronic watermarking information extracted and comparing the first amount of information with the second amount of information to detect whether or not the digital signal to be detected has been subjected to the compression process.

This enables detection of whether or not a digital signal with electronic watermarking information embedded therein has been compressed.

## Description

### Technical Field

The present invention relates to a signal processing apparatus and method that is effective in protecting the copyright of digital signals.

### Background Art

Due to development of the Internet or the like, for example, musical contents are distributed to computers of an unspecified number of users from Web sites (servers) via the network; infringement of copyright for musical contents has thus become a problem.

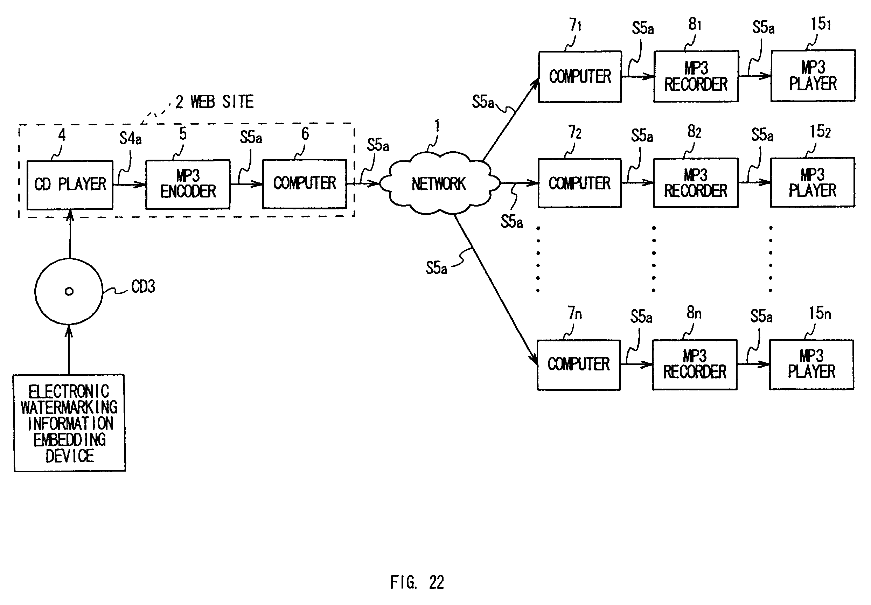

Figure 22 is a view useful in explaining how the copyright of musical contents is infringed on.

As shown in this figure, at a Web site (a server) 2 on a network 1, a CD (Compact Disk) 3 to be protected for the copyright is reproduced by a CD player 4 and audio data S4a obtained through this reproduction are compressed in an MPEG (Moving Picture Experts Group)-Layer 3 (hereafter referred to as an "MP3") to generate an MP3 file S5a.

Next, an unspecified number of computers 7₁ to 7ₙ access a computer 6 at the Web site 2 via the network 1, and the MP3 file S5a associated with the CD3 is downloaded to the computers 7₁ to 7ₙ of the unspecified number of users.

Next, the users output the MP35a file from the computers 7₁ to 7ₙ to MP3 recorders 8₁ to 8ₙ, respectively.

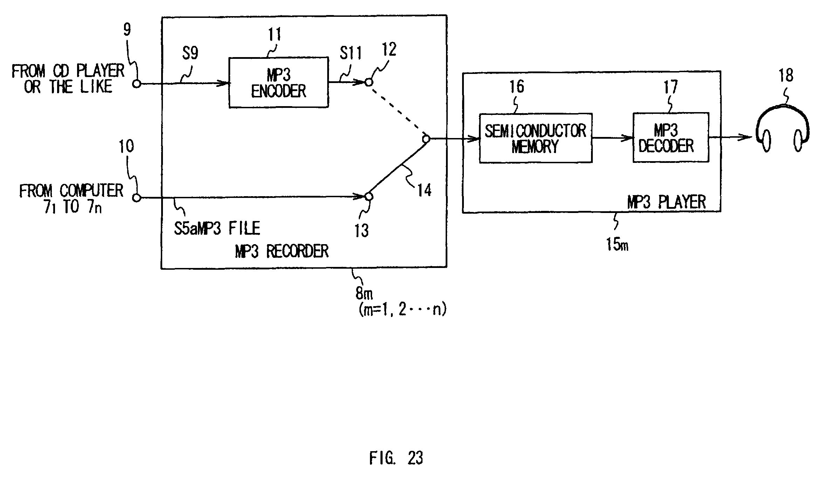

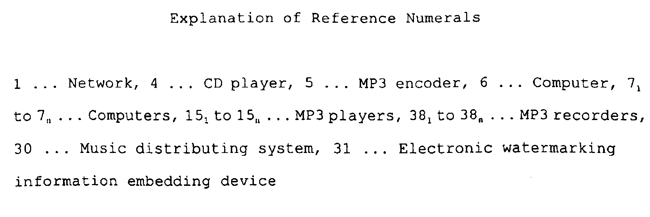

As shown in Figure 23, the MP3 file 5a is input to a terminal 10 in each of the MP3 recorders 8₁ to 8ₙ and then written to a semiconductor memory 16 such as an EEPROM (Electrically Erasable Programmable Read Only Memory) in a corresponding one of MP3 players 15₁ to 15ₙ via a terminal 13 and a switch 14.

Then, the MP3 file S5a read from the semiconductor memory 16 of the MP3 player 15₁ to 15ₙ is decoded by an MP3 decoder 17, and sounds are then output from a headphone 18 depending on results of the decoding. At this point, the sounds output from the headphone 18 have almost the same quality as those obtained when the CD3 is reproduced by the CD player 4.

In addition, the MP3 recorders 8₁ to 8ₙ each have an MP3 encoder 11, as shown in Figure 23, and when an uncompressed audio signal reproduced by the CD player is input to the MP3 encoder 11 via a terminal 9, the MP3 encoder 11 compresses the audio signal S9 in the MP3 to generate an MP3 file S11. The MP3 recorder 8ₘ then uses, for example, an SCMS (Serial Copy Management System) to control copying so as to write only one generation of the MP3 file S11 generated from the audio signal S9, to the semiconductor memory 16 via the terminal 12 and the switch 14.

As described above, the MP3 recorders 8₁ to 8ₙ shown in Figures 22 and 23 have a function for protecting the copyright of the uncompressed audio data S9 reproduced from the CD based on the SCMS. Since, however, the MP3 file input via the network 1 is unconditionally written to the semiconductor 16 in the MP3 player 15₁ to 15ₙ, a problem occurs that users may infringe on the copyright.

A similar problem occurs with digital video signals distributed via the network after compression.

### Disclosure of the Invention

The present invention is provided in view of the above described problem of the prior art, and it is an object thereof to provide a signal processing apparatus and method that can detect whether or not a digital signal has been compressed and that can effectively suppress infringement of the copyright for compressed digital signals distributed to an unspecified number of users via, for example, a network.

To solve the above described problems of the prior art and attain the above object, a signal processing apparatus according to a first aspect of the present invention detects whether or not a digital signal has been subjected to a compression process and is characterized by comprising storage means for storing a first amount of information used as a reference for detecting whether or not a digital signal with electronic watermarking information embedded therein has been subjected to the compression process, the first amount of information being the amount of the electronic watermarking information, extraction means for extracting the electronic watermarking information contained in the digital signal to be detected, and detection means for detecting a second amount of information that is the amount of the electronic watermarking information extracted and comparing the first amount of information with the second amount of information to detect whether or not the digital signal to be detected has been subjected to the compression process.

In the signal processing apparatus according to the present invention, an extraction circuit first extracts electronic watermarking information contained in a digital signal to be detected.

Then, a detection circuit detects a second amount of information that is the amount of electronic watermarking information extracted and compares the second amount of information with the first amount of information read from the storage means, to detect, based on a result of the comparison, whether or not the digital signal to be detected has been subjected to a compression process.

When the digital signal is compressed, at least part of the amount of information in electronic watermarking information embedded in the digital signal is lost due to an error in quantization carried out during the compression process. Thus, whether or not the digital signal to be processed has been subjected to the compression process can be detected by comparing the second amount of information that is the amount of information in electronic watermarking information extracted from the digital signal to be detected, with the first amount of information used as a reference for detecting whether or not the digital signal with electronic watermarking information embedded therein has been subjected to the compression process, the first amount of information being the amount of information in the electronic watermarking information.

Alternatively, a signal processing apparatus according to the present invention detects whether or not a digital signal has been subjected to a compression process and is characterized by comprising comparison means for determining a level and a polarity of a predetermined frequency component with electronic watermarking information embedded therein, based on a conversion factor for a frequency domain of the digital signal, storage means for storing a third threshold value used as a reference for detecting whether the digital signal has been subjected to the compression process, and detection means detecting, based on a result of the comparison means and the third threshold value, whether the digital signal has been subjected to the compression process.

Alternatively, the comparison means detects, based on the conversion factor, one of plural sets of a predetermined first frequency component and a second frequency component offset from the first frequency component by a predetermined distance on a frequency axis in which at least one of the frequency components has a level at which it is lost due to the compression process, and compares a polarity of the first frequency component of the detected set with a polarity of corresponding second frequency component thereof, and the detection means compares, based on a result obtained by the comparison means, a rate of sets having a matched polarity with the third threshold value, to detect whether the digital signal has been subjected to the compression process.

Alternatively, the storage means stores a fourth threshold value used as a reference for detecting whether or not the digital signal has electronic watermarking information embedded therein, and the comparison means detects, based on the conversion factor, one of plural sets of a predetermined first frequency component and a second frequency component offset from the first frequency component by a predetermined distance on a frequency axis in which both frequency components have a level at which they are not lost despite the compression process, and compares a polarity of the first frequency component of the detected set with the corresponding second frequency component thereof, and the detection means compares, based on a result obtained by the comparison means, a rate of sets having a matched polarity with the fourth threshold value, to detect whether the digital signal has the electronic watermarking information embedded therein.

In a signal processing apparatus according to a second aspect of the present invention, processing similar to that by the signal processing apparatus is carried out by an electronic watermarking information detecting circuit. To protect the copyright, if the digital signal has not been subjected to the compression process, the digital signal is permitted to be written to a memory in a reproduction device, and otherwise the digital signal is prohibited from being stored in the storage means of the reproduction device.

Alternatively, a signal processing apparatus according to a third aspect embeds electronic watermarking information in a digital signal and has a signal embedding circuit for embedding the electronic watermarking information in the digital signal so that a predetermined or larger amount of information is lost from the electronic watermarking information when compressed.

### Brief Description of the Drawings

Figure 1 is a block diagram of a music distributing system according to a first embodiment of the present invention.
Figure 2 is a view useful in explaining another form of an MP3 recorder.
Figure 3 is a block diagram of an electronic watermarking information embedding device shown in Figure 1.
Figure 4 is a chart showing frequency spectra of an audio signal and an electronic watermarking information signal shown in Figure 3.
Figure 5 is a block diagram of the MP3 encoder shown in Figure 1.
Figure 6 is a block diagram of the MP3 recorder and an MP3 player both shown in Figure 1.
Figure 7 is a block diagram of an electronic watering information detecting circuit for processing an audio signal shown in Figure 6.
Figure 8 is a view useful in explaining processing carried out by the electronic information watermarking detecting circuit shown in Figure 7.
Figure 9 is a flow chart of processing carried out by the detecting circuit shown in Figure 7.
Figure 10 is block diagram of an electronic watermarking information detecting circuit for processing an MP3 file shown in Figure 6.
Figure 11 is a flow chart of processing by the detecting circuit shown in Figure 10.
Figure 12 is a block diagram of an MP3 decoder 17 of the MP3 player shown in Figure 6.
Figure 13 is block diagram of a music distributing system according to a second embodiment of the present invention.
Figure 14 is a block diagram of an electronic information embedding device shown in Figure 13.
Figure 15 is a graph useful in explaining processing executed by the electronic watermarking information embedding device shown in Figure 14.
Figure 16 is a view useful in explaining frequency masking identification used by the electronic watermarking information embedding device shown in Figure 14.
Figure 17 is a block diagram of the MP3 recorder shown in Figure 13.
Figure 18 is a block diagram of an electronic watermarking information detecting circuit for processing an audio signal shown in Figure 17.
Figure 19 is a block diagram of an electronic watermarking information detecting circuit for processing an MP3 file shown in Figure 17.
Figure 20 is a graph useful in explaining processing executed by a detecting circuit according to a variation (1) of a second embodiment of the present invention, which is shown in Figures 18 and 19.
Figure 21 is a graph useful in explaining other variations of the second embodiment of the present invention.
Figure 22 is a block diagram of a conventional music distributing system.
Figure 23 is a block diagram of an MP3 recorder and an MP3 player both shown in Figure 22.

### Best Mode of Carrying Out the Invention

A music distributing system according to embodiments of the present invention.

### First Embodiment

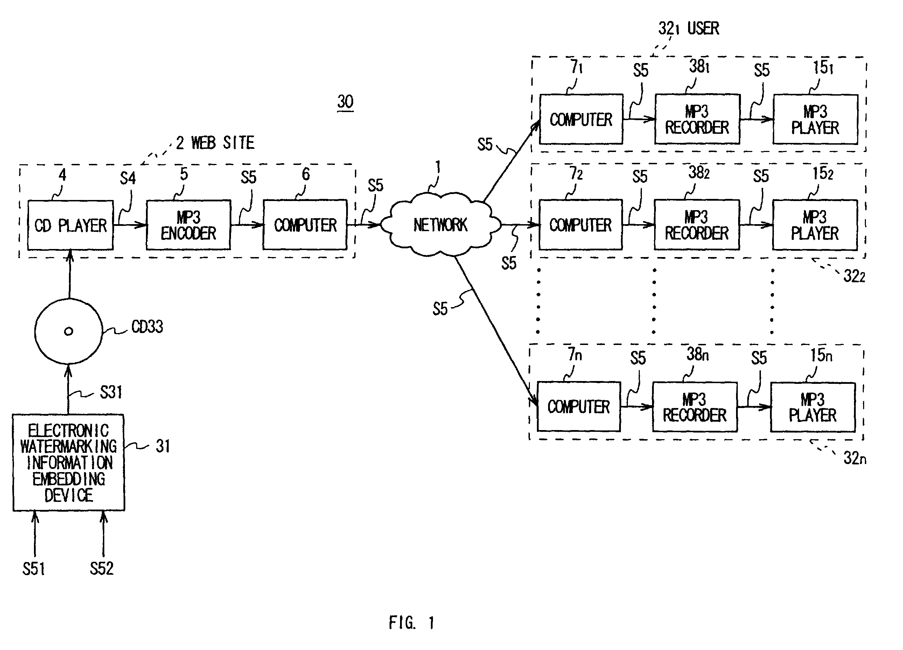

Figure 1 is a block diagram of a music distributing system according to this embodiment.

As shown in Figure 1, in the music distributing system 30, a computer 6 at a Web site 2 is connected to computers 7₁ to 7ₙ of users 32₁ to 32ₙ via a network 1. n is an arbitrary integer.

### [Outline of the Music Distribution System 30]

In the music distributing system shown in Figure 1, a CD 33 has electronic watermarking information embedded in audio signals by an electronic watermarking information embedding device 31 in such a manner that sounds depending on the audio signals do not have their listening feelings spoiled or easily removed as described below. In addition, as described below, when the electronic watermarking information embedded in the audio signals by the electronic watermarking information embedding device 31 is compressed, for example, in the MP3, about 50% of the amount of information is lost while the remaining 50% remains.

Thus, when a CD 33 purchased at the Web site 2 is reproduced by a CD player 4 to generate an audio signal S4, which is then encoded by an MP3 encoder 5 to generate an MP3 file S5, the rate at which electronic watermarking information remains in the MP3 file S5 is about 50%.

The MP3 file S5 is downloaded to the arbitrary computer 7₁ to 7ₙ owned by the unspecified number of users 32₁ to 32ₙ via computer 6.

When the user 32₁ to 32ₙ attempts to store the downloaded MP3 file S5 in an MP3 player 15₁ to 15ₙ using an MP3 recorder 38₁ to 38ₙ, the processing shown below is carried out in the MP3 recorder 38₁ to 38ₙ.

The MP3 recorder 38₁ to 38ₙ detects the rate of electronic watermarking information contained in the MP3 file S5 input from the computer 7₁ to 7ₙ is about 50%, the MP3 file S5 is not stored in the MP player 15₁ to 15ₙ, in order to protect the copyright. On the other hand, if the remaining rate of electronic watermarking information contained in the MP3 file S5 input from the computer 7₁ to 7ₙ, is about 0%, the MP3 file S5 is stored in the MP player 15₁ to 15ₙ.

The remaining rate of electronic watermarking information is about 0% if the MP3 compressed audio signals do not originally have electronic watermarking information embedded therein; copy control for protection of the copyright is assumed to be unnecessary in such a case.

Additionally, if the remaining rate of electronic watermarking information contained in the input audio signals is about 100%, the MP3 recorder 38₁ to 38ₙ compresses only one generation of the audio signals in the MP3 based on the SCMS and then stores them in the MP3 player 15₁ to 15ₙ.

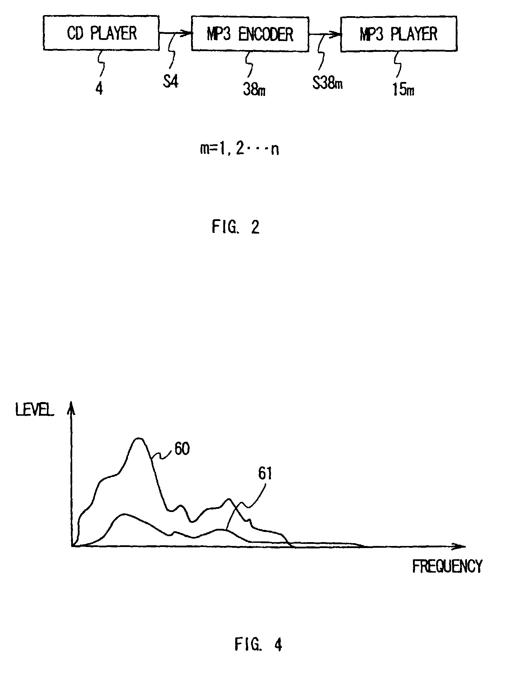

In this case, the remaining rate of electronic watermarking information is 100% if, for example, the audio signal S4 reproduced from the CD player 4 is directly input to the MP3 recorder 38₁ to 38ₙ as shown in Figure 2.

Each component of the music distributing system 30 shown in Figure 1 will be described below in detail.

### [Electronic Watermarking Information Embedding Device 31]

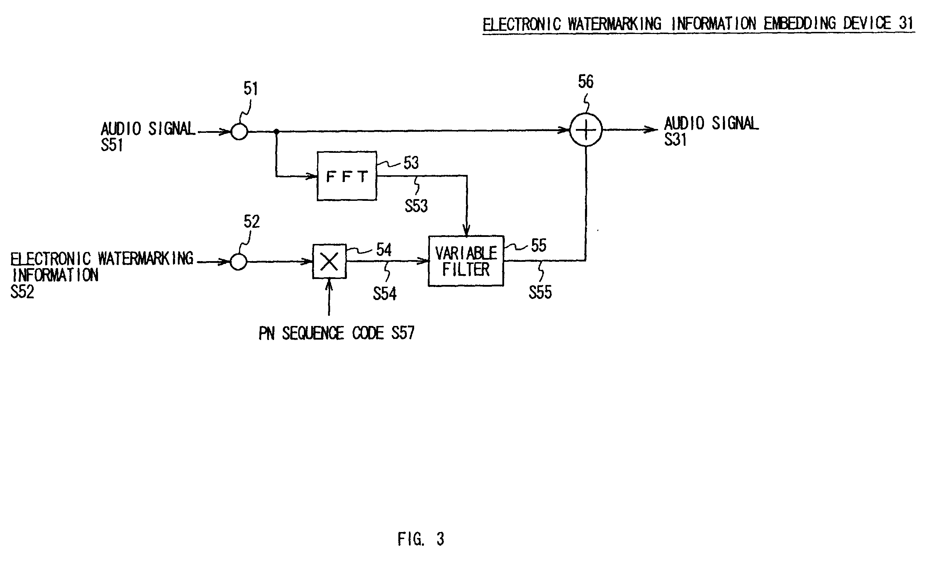

Figure 3 is a block diagram of the electronic watermarking information embedding device 31.

As shown in Figure 3, the electronic watermarking information embedding device 31 comprises terminals 51 and 52, an FFT (Fast Fourier Transformation) processing circuit 53, a multiplication circuit 54, a variable filter circuit 55, and an addition circuit 56.

The terminal 51 outputs an input audio signal S51 to the FFT processing circuit 53 and the addition circuit 56.

The terminal 52 outputs input electronic watermarking information S52 to the multiplication circuit 54.

The FFT processing circuit 53 converts the audio signal S51 from a time domain to a frequency domain to generate a frequency spectrum S53, which is then output to the variable filter circuit 55.

The multiplication circuit 54 multiplies the electronic watermarking information S52 by a PN (Pseudo Noise) sequence signal S57 of a small amplitude to spread the spectrum of the electronic watermarking information S52 over a wide frequency zone in order to generate an electronic watermarking information signal S54 of a fine-level amplitude. The electronic watermarking information signal S54 is then output to the variable filter circuit 55.

The variable frequency filter circuit 55 uses filter characteristics depending on the frequency spectrum S53 to filter the electronic watermarking information signal S54 in order to generate an electronic watermarking information signal S55, which is then output to the addition circuit 56.

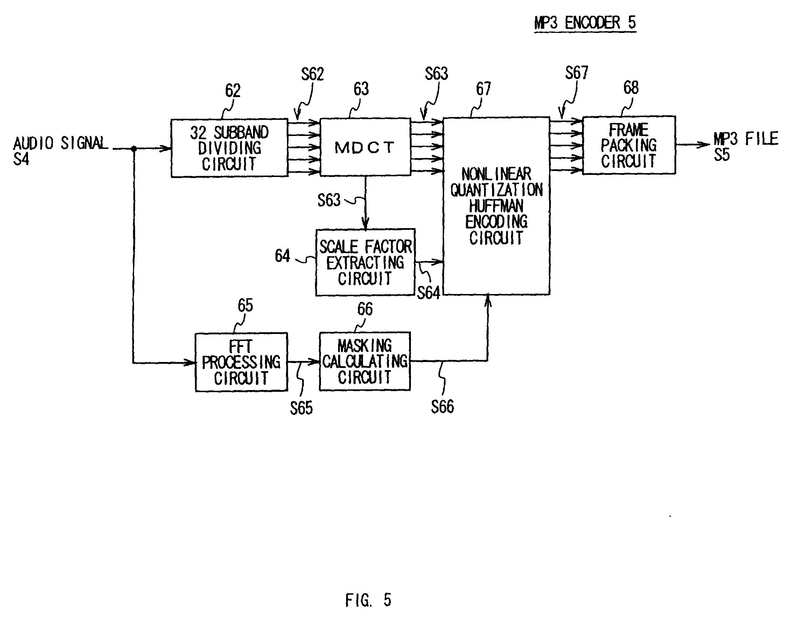

At this point, a frequency spectrum 61 of the electronic watermarking information signal S55 is shaped similarly to a frequency spectrum 60 of the audio signal S51, as shown in Figure 4.

The addition circuit 56 adds together the audio signal S51 from the terminal 51 and the electronic watermarking information signal S55 from the variable filter circuit 55, to generate an audio signal S31 having the electronic watermarking information embedded therein. The addition circuit 56 records the audio signal S31 in the CD33 shown in Figure 1.

At this point, the electronic watermarking information signal S55 is embedded in the audio signal S51 using as units, modules each comprising a predetermined number of samples constituting the audio signal S51; the electronic watermarking information signal S55 may be embedded over the entire audio signal S51 or in part thereof.

In this case, however, the electronic watermarking information signal is also embedded so that when compressed using an encoding technique such as the MP3, about 50% of the amount of information is lost while the remaining amount remains.

### [CD player 4]

The CD player 4 is general and rotates the CD 33 while using an optical pickup to read an audio signal recorded on a recording surface of the CD 33, before outputting the read audio signal S4 to the MP3 encoder 5.

### [MP3 Encoder 5]

Figure 5 is a block diagram of the MP3 encoder 5.

As shown in this figure, the MP3 encoder 5 comprises a 32 subband dividing circuit 62, an MDCT processing circuit 63, a scale factor extracting circuit 64, an FFT processing circuit 65, a masking calculating circuit 66, a non-linear quantization Huffman encoding circuit 67, and a frame packing circuit 68, to generate the MP3 file S5, in which the amount of information in the audio signal S4 has been compressed to about one tenth.

The 32 subband dividing circuit 62 divides the audio signal S4 input from the CD player 4 shown in Figure 1, into 32 frequency zones, which are then output to the MDCT processing circuit 63 as an audio signal S62.

The MDCT processing circuit 63 carries out MDCT (Modified Discrete Cosine Transform) for reducing block distortions to obtain 256 MDCT coefficients from 512 samples contained in the audio signal S62, and outputs the MDCT coefficients S63 to the scale factor extracting circuit 64.

The scale factor extracting circuit 64 normalizes the 256 MDCT coefficients so that, for example, their largest value is one, and outputs this scale factor to the non-linear quantization Huffman encoding circuit 67 as a scale factor S64.

The FFT processing circuit 65 subjects the audio signal S4 to FFT using 1024 samples as one unit, to generate an FFT conversion factor S65, which is then output to the masking calculating circuit 66.

Based on the FFT conversion factor S65, the masking calculating circuit 66 uses an auditory masking characteristic to calculate a masking curve and outputs a result of the calculation S66 to the non-linear quantization Huffman encoding circuit 67.

The non-linear quantization Huffman encoding circuit 67 uses the scale factor S64 and the result S66 of the calculation of the masking curve to subject the MDCT coefficient S63 to non-linear quantization and Huffman encoding in order to generate encoded data S67, which are then output to the frame packing circuit 68.

In this case, when the MDCT coefficient S63 is non-linearly quantized, information on the level of each frequency component of the audio signal S4 is lost due to an error in quantization.

The frame packing circuit 68 adds a frame header and bit assignment information to the encoded data S67 to generate the MP3 file S5, which is then output to the computer 6 shown in Figure 1.

### [Computer 6]

On receiving a request signal from the computer 7₁ to 7ₙ via the network 1, the computer 6 transmits the MP3 file S5 via the network 1 to the computer 7₁ to 7ₙ which has transmitted the request signal.

### [Computers 7₁ to 7ₙ]

The computers 7₁ to 7ₙ each transmit the request signal to the computer 6 via the network 1 and receive (download) the MP3 file S5 depending on the request signal, from the computer 6 via the network 1.

### [MP3 Recorder 38ₘ]

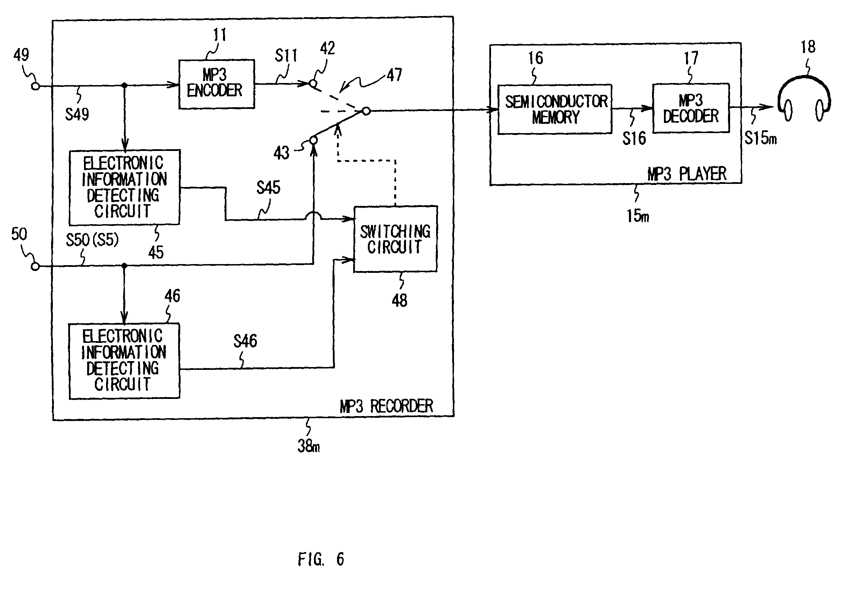

Figure 6 is a block diagram of the MP3 recorder 38ₘ. m is an arbitrary integer that meets 1≤m≤n.

As shown in this figure, the MP3 recorder 38ₘ comprises an MP3 encoder 11, electronic watermarking detecting circuits 45 and 46, a switch 47, and a switching circuit 48.

The MP3 encoder 11 essentially has the same configuration as the above described MP3 encoder 5 shown in Figure 5.

The MP3 encoder 11 compresses an uncompressed audio signal S49 input from a terminal 49 to output the obtained MP3 file S11 to a terminal 42.

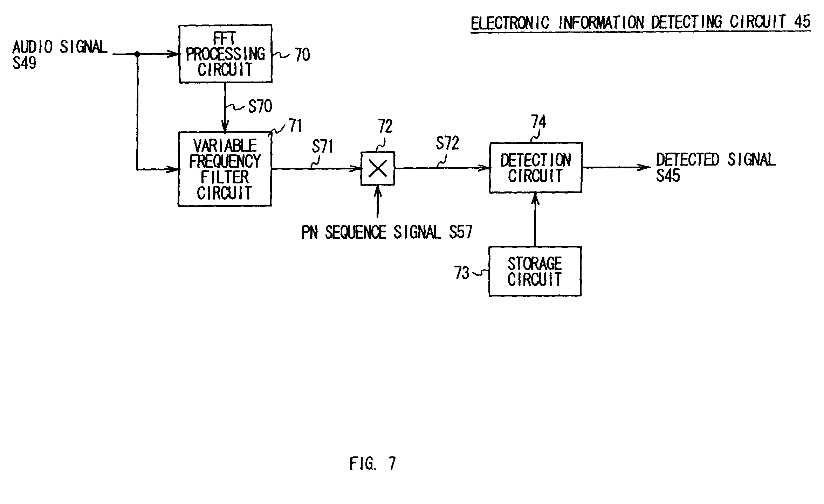

Figure 7 is a block diagram of the electronic watermarking information detecting circuit 45.

As shown in this figure, the electronic watermarking information detecting circuit 45 comprises, for example, an FFT processing circuit 70, a variable frequency filter circuit 71, a multiplication circuit 72, a storage circuit 73, and a detection circuit 74.

The FFT processing circuit 70 converts the audio signal S49 input from the terminal 48 shown in Figure 6, from a time domain to a frequency domain to generate a frequency spectrum S70, which is then output to the variable frequency filter circuit 71.

The variable frequency filter circuit 71 uses filter characteristics depending on the frequency spectrum S70 to filter an electronic watermarking information signal S71 contained in the audio signal S49, to extract and output an electronic watermarking information signal S71.

The multiplication circuit 72 multiplies the electronic watermarking information S71 by the PN sequence signal S57 that is the same as that used in writing the electronic watermarking information as shown in Figure 3, thereby generating an original electronic watermarking information signal S72 with the PN sequence codes removed therefrom. The multiplication circuit 72 outputs the electronic watermarking information signal S72 to the detection circuit 74.

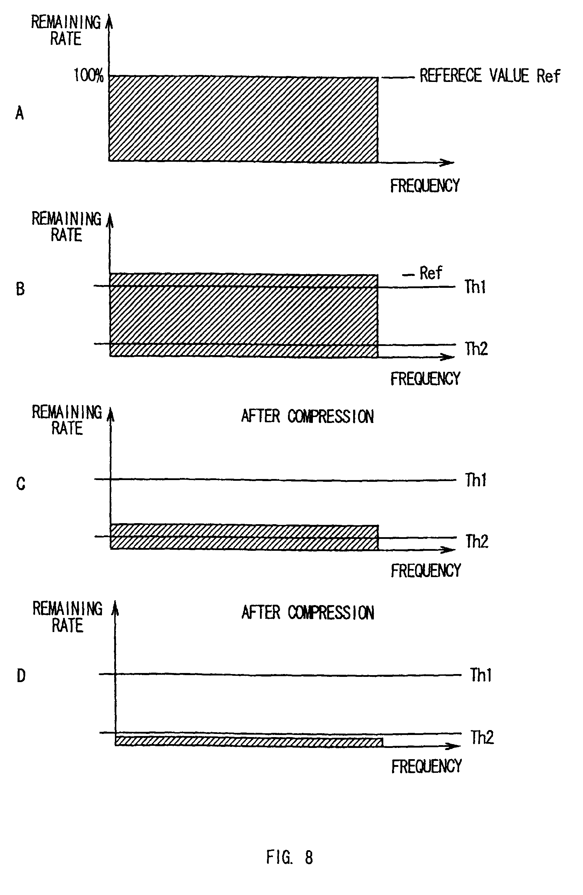

The storage circuit 73 stores a reference value Ref shown in Figure 8A and corresponding to the amount of information in the electronic watermarking information signal embedded by the electronic watermarking information embedding device 31 as well as threshold values Th1 and Th2 shown in Figure 8B.

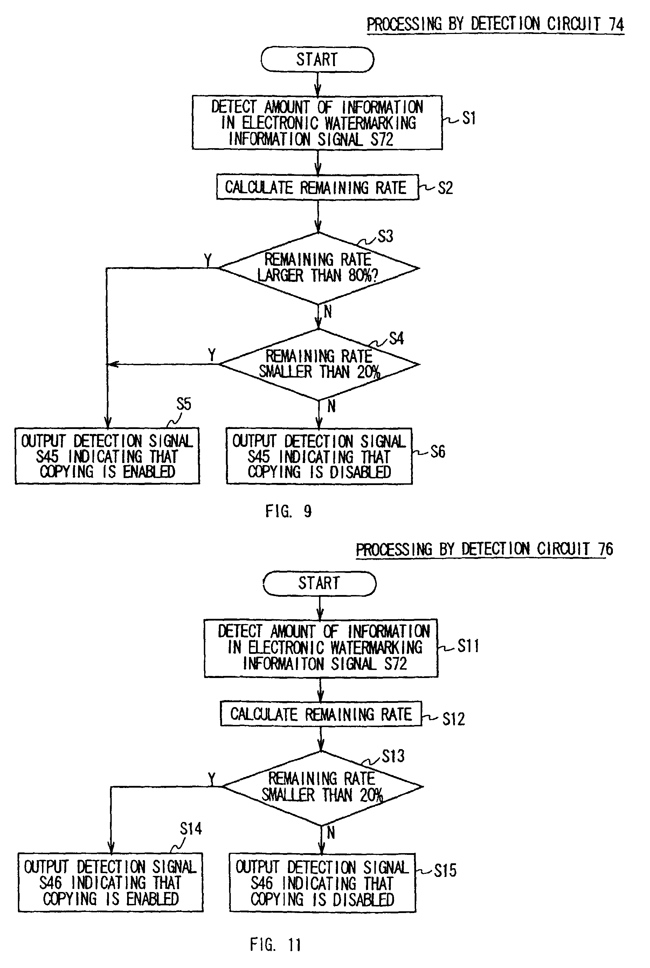

Figure 9 is a flow chart of processing executed by the detection circuit.

The detection circuit 74 shown in Figure 9 uses the threshold values Th1 and Th2 shown in Figure 8B to execute the processing shown below.

Step S1: the detection circuit 74 detects the amount of information in the electronic watermarking information signal S72 input from the multiplication circuit 72 shown in Figure 7.

Step S2: the detection circuit 74 divides the amount of information detected at step S1 by the reference value Ref input from the storage circuit 73, to obtain a remaining rate.

Step S3: the detection circuit 74 determines whether or not the remaining rate calculated at step S2 is larger than 80%, that is, the remaining rate of electronic watermarking information indicated by the electronic watermarking information signal S72 is larger than the threshold value Th1 as shown in Figure 8C. If the detection circuit 74 determines that the rate is larger than 80%, it carries out processing at the step S5, and otherwise it executes processing at step S4.

Step S4: the detection circuit 74 determines whether or not the remaining rate calculated at step S2 is smaller than 20%, that is, the amount of watermarking information remaining indicated by the electronic watermarking information signal S72 is smaller than the threshold value Th2 as shown in Figure 8D. If the detection circuit 74 determines that the remaining rate is smaller than 20%, it executes processing at step S5 and otherwise it executes processing at step S6.

Step S5: the detection circuit 74 outputs a detection signal S45 indicating that copying is enabled, to the switching circuit 48 shown in Figure 6.

Step S5 is executed if the remaining rate of the electronic watermarking information signal S72 is larger than 80% or smaller than 20%, as shown in Figure 8B or 8D. If the remaining rate of the electronic watermarking information signal S72 is larger than 80%, it can be determined that the audio signal S49 shown in Figure 6 has never been compressed in the MP3 or the like but has been obtained by for example, reproducing the CD from the CD player 4 as shown in Figure 2. Thus, the copyright is unlikely to be unduly infringed on even if the audio signal S49 is compressed and recorded in the semiconductor memory 16 of the MP3 player 15ₘ. Alternatively, if the remaining rate of the electronic watermarking information signal S72 is smaller than 20%, it can be determined that the audio signal S49 originally contains no electronic watermarking information, and the copyright is unlikely to be unduly infringed on even if the audio signal S49 is compressed and recorded in the semiconductor memory 16 of the MP3 player 15ₘ.

Step 6: the detection circuit 74 outputs a detection signal S45 indicating that copying is disabled, to the switching circuit 48 shown in Figure 6.

Step S6 is executed if the remaining rate of the electronic watermarking information signal S72 embedded in the audio signal S49 is 20% or larger and 80% or smaller as shown in Figure 8C. In this case, it can be determined that the audio signal S49 has been subjected to the MP3 compression process. Consequently, the copyright is likely to be unduly infringed on if the audio signal S49 is recorded in the semiconductor memory 16 of the MP3 player 15ₘ.

The remaining rate of the electronic watermarking information signal S72 is as described above because if the audio signal S49 has been compressed, at least part of the electronic watermarking information is lost due to a quantization error in a quantization process executed during the compression process, thereby increasing an error rate to prevent the electronic watermarking information from being completely decoded.

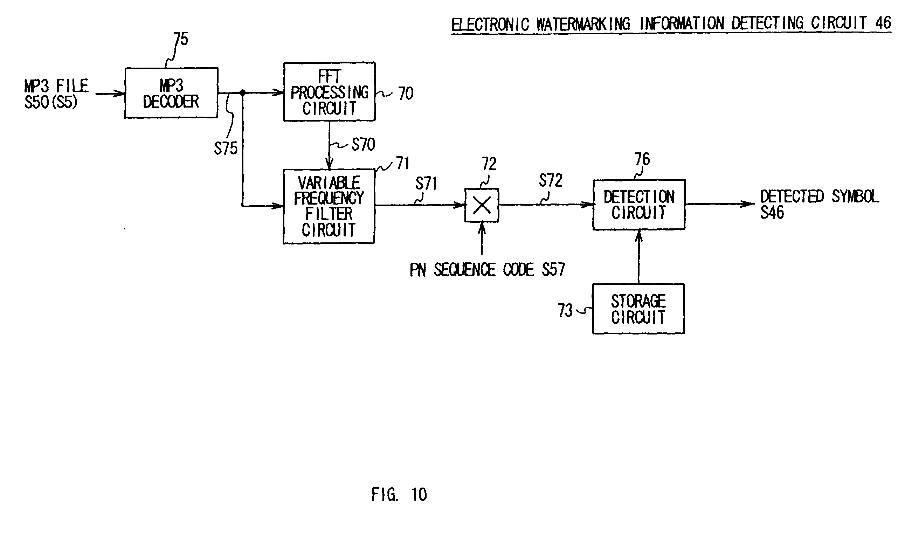

Figure 10 is a block diagram of the electronic watermarking information detecting circuit 46.

As shown in Figure 10, the electronic watermarking information detecting circuit 45 comprises, for example, an FFT processing circuit 70, a variable frequency filter circuit 71, a multiplication circuit 72, a storage circuit 73, an MP3 decoder 75, and a detection circuit 76.

In Figure 10, the components denoted by the same reference numerals as in Figure 7 are the same as those of the electronic watermarking information detecting circuit 45 which are denoted by the same reference numerals.

That is, the electronic watermarking information detecting circuit 46 differs from the electronic watermarking detecting circuit 45 in that an MP3 decoder 75 is added before the FET processing circuit 70 and in that the detection circuit 76 has different processing contents.

In the electronic watermarking detecting circuit 46, the MP3 decoder 75 expands an MP3 file S50 (S5) input from a terminal 50, shown in Figure 6, to generate an audio signal S75, which is then output to the FTE processing circuit 70.

Processing executed by the FET processing circuit 70, the variable frequency filter circuit 71, and the multiplication circuit 72 based on the audio signal S75 is the same as that executed by the above described electronic watermarking information detecting circuit 45.

Processing executed by the detection circuit 76 will be explained below.

Step S11: the detection circuit 76 detects the amount of information in the electronic watermarking signal S72 input from the multiplication circuit 72 shown in Figure 10.

Step S12: the detection circuit 76 divides the amount of information detected at step S11 by a reference value Ref read from the storage circuit 73 to calculate the remaining rate.

Step S13: the detection circuit 76 determines whether or not the remaining rate calculated at step S12 is smaller than 20%, that is, the amount of watermarking information remaining indicated by the electronic watermarking information signal S72 is smaller than the threshold value Th2 as shown in Figure 8D. If the detection circuit 76 determines that the remaining rate is smaller than 20%, it executes processing at step S14 and otherwise it executes processing at step S15.

Step S14: the detection circuit 76 outputs a detection signal S46 indicating that copying is enabled, to the switching circuit 48 shown in Figure 6.

That is, if the remaining rate of the electronic watermarking information signal S72 is smaller than 20%, it can be determined that the MP3 file S50 (S5) originally has no electronic watermarking information embedded therein. Thus, the copyright is unlikely to be unduly infringed on even if the MP3 file S50 compressed and recorded in the semiconductor memory 16 of the MP3 player 15ₘ.

Step 15: the detection circuit 76 outputs a detection signal S46 indicating that copying is disabled, to the switching circuit 48 shown in Figure 6.

This is because if the remaining rate of the electronic watermarking information signal S72 is larger than 20%, the MP3 file S50 is likely to have electronic watermarking information embedded therein.

Based on switching control provided by the switching circuit 48, the switch 47 enters one of three states: connection to the terminal 42, connection to the terminal 43, and no connection to the terminal 42 or 43.

As shown in Figure 6, the switching circuit 48 receives inputs of the detection signal S45 from the electronic information detecting circuit 45 shown in Figure 7 and the detection signal S46 from the electronic watermarking information detecting circuit 46 shown in Figure 10, and controls the switch 47 to connect to the terminal 42 if the detection signal S45 indicates that copying is enabled or to connect to the terminal 43 if the detection signal S46 indicates that copying is enabled. Otherwise, the switching circuit 48 controls the switch 47 so as not to connect to the terminal 42 or 43.

### [MP3 Players 15₁ to 15ₙ]

Figure 6 is a block diagram of the MP player 15ₘ.

As shown in Figure 6, the MP3 player 15ₘ has the semiconductor memory 16 and the MP3 decoder 17.

The MP3 player 15ₘ can be removably connected to the MP3 recorder 38ₘ, and this connection is made when, for example, a MP3 file or the like downloaded via the network 1 is written to the semiconductor memory 16 or when the audio signal S4 reproduced by the CD player 4 is compressed and written to the semiconductor memory 16 as shown in Figure 2. After writing the MP3 file from the MP3 recorder 38ₘ to the semiconductor memory 16, the MP3 player 15ₘ is disconnected from the MP3 recorder 38m and used as a portable player.

The semiconductor memory 16 is, for example, an EEPROM having a storage capacity of, for example, 32 to 64 MB and stores the MP3 files S11 and S50 (S5) input from the MP3 recorder 38ₘ.

In this embodiment, the semiconductor memory has been illustrated as a storage circuit, but other storage circuits or recording media such as MDs (Mini Disks) can also be used.

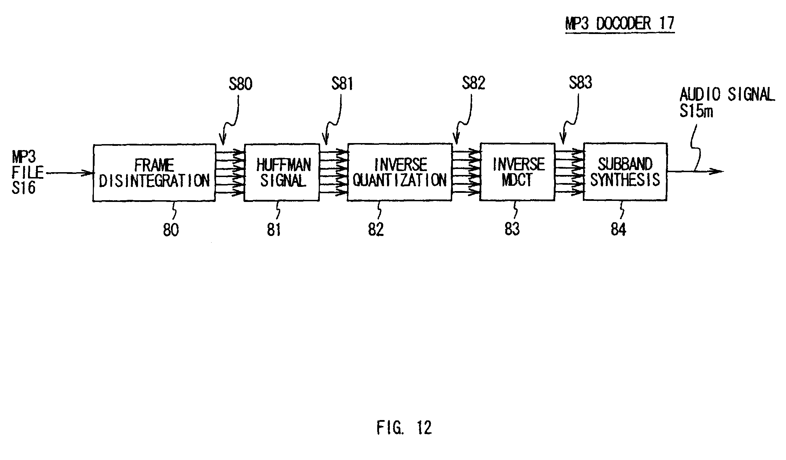

Figure 12 is a block diagram of the MP3 decoder 17.

As shown in Figure 12, the MP3 decoder 17 has a frame disintegrating circuit 80, a Huffman decoding circuit 81, an inverse quantization circuit 82, an inverse MDCT circuit 83, and a subband synthesizing circuit.

The frame disintegrating circuit 80 disintegrates the MP3 file S16 read from the semiconductor memory 16 to obtain encoded data S80, which are then output to the Huffman decoding circuit 81.

The Huffman decoding circuit 81 subjects the encoded data S80 to Huffman decoding to generate data S81, which are then output to the inverse quantization circuit 82.

The inverse quantization circuit 82 inversely quantizes the data S81 to obtain an MDCT coefficient S82, which is then output to the inverse MDCT circuit 83.

The inverse MDCT circuit 83 subjects the MDCT coefficient S82 to an inverse MDCT process to obtain an audio signal S83, which is then output to the subband synthesizing circuit 84.

The subband synthesizing circuit 84 subjects the audio signal S83 to subband synthesis to generate and reproduce an audio signal S15ₘ, which is then output to the headphone 18.

### [Headphone 18]

The headphone 18 outputs sounds corresponding to the audio signal S15ₘ.

A general operational form of the music distributing system 30 shown in Figure 1 will be explained.

### First operational form

In the music distributing system 30, for example, according to the author's desire, a manufacturer of the CD33 uses the electronic watermarking information embedding device 31 shown in Figure 3 to embed the electronic watermarking information signal S55 in the audio signal S51 to generate the audio signal S51 in order to manufacture the CD33 with the audio signal S31 recorded thereon.

In this case, when compressed in the MP3, about 50% of the amount of information is lost from the electronic watermarking information signal S55, with the remaining 50% of the amount of information remaining.

The CD33 is shipped and then purchased, for example, by the owner of the Web site 2.

In the Web site 2, the CD player 4 is used to reproduce the CD33 to generate the audio signal S4 and the MP3 encoder shown in Figure 5 compresses the audio signal S4 in the MP3 to generate the MP3 file S5.

In this case, the rate of the electronic watermarking information remaining in the MP3 file S5 is about 50%.

Then, the MP3 file S5 is downloaded to the arbitrary computers 7₁ to 7ₙ owned by the unspecified number of users 31ₘ via the computer 6.

When the user 32m attempts to store the downloaded MP3 file S5 in the MP3 player 15ₘ using the MP3 recorder 38ₘ shown in Figure 6, the MP3 recorder 38m executes the processing shown below.

The MP3 recorder 38ₘ uses the electronic watermarking information detecting circuit 46 shown in Figures 6 and 10 to detect the remaining rate of the electronic watermarking information contained in the MP3 file S5 based on a flow shown in Figure 11. Since the remaining rate is 20% or higher, the MP3 recorder 38ₘ determines that the file has electronic watermarking information embedded therein and has also been compressed, and then outputs the detection signal S46 to the switching circuit 48 indicating that copying is disabled.

As a result, the switching circuit 48 shown in Figure 6 is not connected to the terminal 43, thereby preventing the MP3 file S5 from being written to the MP3 player 15ₘ from the MP3 recorder 38ₘ.

Thus, even if an audio signal with electronic watermarking information embedded therein is compressed into the MP3 file S5, which is then distributed to the computers 7ₘ of an unspecified number of users via the network 1, the user 32ₘ cannot use the MP3 file S5 in the MP3 player 15ₘ. As a result, infringement of the copyright can be effectively suppressed.

If an audio signal with no electronic watermarking information embedded therein is compressed into the MP3 file S5 using the MP3 encoder 5 and then distributed from the computer 7 (6) in the Web site 2 to the computer 7m via the network 1, the detection circuit 76 of the electronic watermarking information detecting circuit 46 shown in Figures 6 and 10 determines that the remaining rate of the electronic watermarking information signal S72 is smaller than 20% and outputs the detection signal S46 to the switching circuit 48 indicating that copying is enabled (Figure 11), causing the switch 47 to be connected to the terminal 43. Thus, the MP3 file S5 can be written from the MP3 recorder 38ₘ to the semiconductor memory 16 of the MP3 player 15ₘ.

### Second Operation Form

If, for example, the user connects the CD player 4 to the terminal 49 of the MP3 recorder 38ₘ shown in Figure 6 to input the audio signal S4 (S49) reproduced by the CD player 4, to the MP3 recorder 38ₘ, as shown in Figure 2, the MP3 recorder 38ₘ executes the processing shown below.

The MP3 recorder 38ₘ uses the electronic watermarking information detecting circuit 45 shown in Figures 6 and 7 to determine, based on the flow shown in Figure 9, that the audio signal has electronic watermarking information embedded therein but has not been compressed, because the remaining rate of electronic watermarking information is larger than 80%. The MP3 recorder 38ₘ then connects the switch 47 to the terminal 42 on condition that only one generation is copied based on the SCMS.

Then, the MP3 recorder 38ₘ writes to the semiconductor memory 16, the MP3 file S11 generated by compressing the audio signal S4 by means of the MP3 encoder 11.

In this manner, the MP3 recorder 38ₘ can write an audio signal reproduced from the CD player 4 and which has not been compressed, to the semiconductor 16 of the MP3 player 15ₘ on condition that only one generation is processed based on the SCMS.

As described above, according to the music distributing system 30 of this embodiment, the electronic watermarking information signal in one form can be used to determine the presence of electronic watermarking information and whether or not the digital signal has been compressed. Alternatively, by adding audio signal use control information to this electronic watermarking information, the electronic watermarking information signal in the above form can be used to determine the presence of electronic watermarking information and whether or not the digital signal has been compressed and to identify the use control information. The use control information controls the use of the audio signal by permitting the audio signal to be copied a predetermined number of times (copying control), permitting the audio signal to be reproduced for only a predetermined period (reproduction control), or permitting the audio signal to be used unlimitedly. Furthermore, electronic watermarking information to be added to the audio signal may include information on the audio signal such as the ID of the author or the ID of the contents. The distribution system according to this embodiment has been illustrated as the audio signal, but the present invention is not limited to this but is applicable to any contents such as animated images, still images, and games.

### Second Embodiment

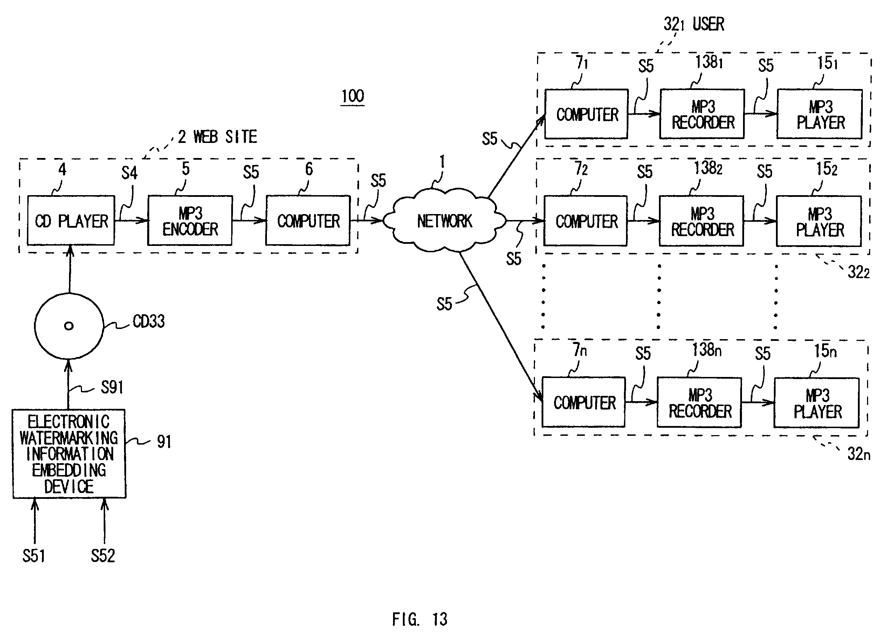

Figure 13 is a block diagram of a music distributing system 100 according to this embodiment.

As shown in Figure 13, the music distributing system 100 has the same configuration as the above described music distributing system 30 shown in Figure 1 except for an electronic watermarking information embedding device 91 and MP3 recorders 138₁ to 138ₙ.

That is, the CD 33, CD player 4, MP3 encoder 5, computer 6, network 1, computers 7₁ to 7ₙ, and MP3 players 15₁ to 15ₙ shown in Figure 13 are the same as the components shown in Figure 1 which have the same reference numerals.

The electronic watermarking information embedding device 91 and the MP3 recorders 138₁ to 138ₙ will be described below in detail.

### [Electronic Watermarking Information Embedding Device 91]

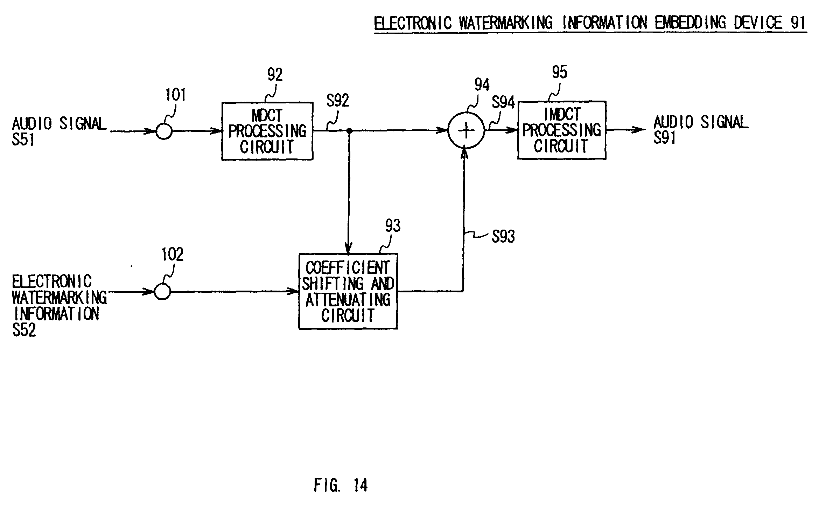

Figure 14 is a block diagram of the electronic watermarking information embedding device 91 used in this embodiment.

As shown in Figure 14, the electronic watermarking information embedding device 91 has an MDCT processing circuit 92, a coefficient shifting and attenuating circuit 93, an addition circuit 94, and an I(Inverse)MDCT circuit 95.

The MDCT processing circuit 92 uses data for 1,024 samples as one unit to carry out an MDCT process on the audio signal S51 input from a terminal 101. The MDCT processing circuit 92 thus generates an MDCT coefficient for 1,024 frequency components to output it to the coefficient shifting and attenuating circuit 93 and the addition circuit 94.

Based on the electronic watermarking information S52, the coefficient shifting and attenuating circuit 93 embeds electronic watermarking information for a plurality of predetermined ones of the 1,024 frequency components.

That is, the coefficient shifting and attenuating circuit 93 attenuates the frequency components to which the electronic watermarking information is to be embedded, in accordance with a fixed ratio and then uses an MDCT coefficient S92 to execute a process corresponding to shifting by, for example, four frequency components in a direction in which the frequency increases. The coefficient shifting and attenuating circuit 93 attenuates then outputs a new MDCT coefficient S93 obtained through the above process, to the addition circuit 94.

The addition circuit 94 adds the MDCT coefficient S92 from the MDCT processing circuit 92 to the MDCT coefficient S93 from the coefficient shifting and attenuating circuit 93 to generate an MDCT coefficient S94, which is then output to the IMDCT circuit 95.

The IMDCT circuit 95 subjects the MDCT coefficient S94 from the addition circuit 94 to IMDCT conversion to generate an audio signal S91 for a time domain.

The electronic watermarking information embedding device 91 records the audio signal S91 on the CD 33.

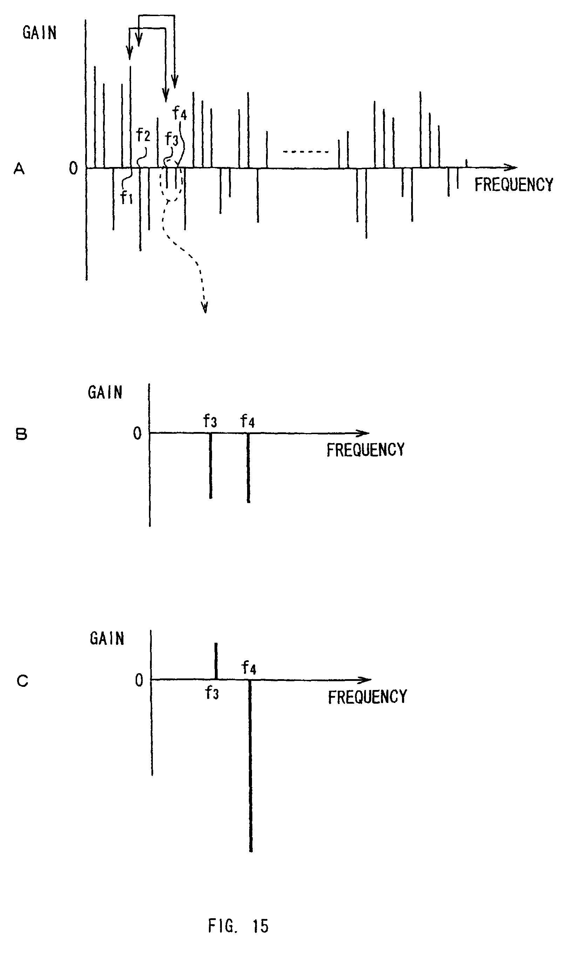

Figure 15 is a graph useful in explaining the processing carried out by the coefficient shifting and attenuating circuit 93 and the addition circuit 94.

For example, as shown in Figure 15A, to embed electronic watermarking information for predetermined first frequency components f₁ and f₂, the coefficient shifting and attenuating circuit 93 uses the MDCT coefficient S92 to execute the process corresponding to shifting of frequency levels by four frequency components in the direction in which the frequency increases from the frequency components f₁ and f₂, the frequency levels being obtained by attenuating the levels of the first frequency components f₁ and f₂ at a fixed ratio. The coefficient shifting and attenuating circuit 93 thus generates the MDCT coefficient S93.

The addition circuit 94 uses the MDCT coefficients S92 and S93 to execute a process corresponding to addition of the levels obtained through the shift to second frequency components f₃ and f₄ shown in Figures 15A and 15B. Thus, the electronic watermarking information S52 is embedded in the audio signal S51 and the levels of the second frequency components f₃ and f₄ are as shown in Figure 15C.

In this case, the first and second frequency components f₁ and f₃ are heteropolar before the electronic watermarking information is embedded but are homopolar (positive polarity) after the electronic watermarking information has been embedded. The first and second frequency components f₂ and f₄ are homopolar (negative polarity) before and after the electronic watermarking information has been embedded.

When the frequency level obtained by attenuating, at the fixed ratio, the level of the first frequency component in which the electronic watermarking information has been determined to be embedded is added to the level of the second frequency component offset from the first frequency component by four frequency components, the levels of the first and second frequency components are likely to become homopolar after the electronic watermarking information has been embedded. The electronic watermarking information detecting circuit utilizes this to detect the electronic watermarking information as described below. In addition, the levels of the first frequencies f₁ and f₂ are attenuated in accordance with the fixed ratio and then added to the second frequency components f₃ and f₄, and in this case, the first and second frequency components have, after the addition, predetermined levels or lower such that at a certain attenuation rate, the levels become equal or close to zero due to a quantization error during compression. That is, according to this embodiment, it is preferable that there be a higher probability that the first and second frequency components are homopolar after the frequency components have been shifted and that frequency components equal to or lower than predetermined levels be lost after compression. In addition, as described below the electronic watermarking information detecting circuit determines whether or not those of the first and second frequency components which have predetermined levels or lower have been compressed, based on the fact that the levels become equal or close to zero due to a quantization error during compression. In the above description, the first frequency components are attenuated at the fixed rate, but it is only necessary that some of the first and second frequency components obtained through the shifting become almost zero after the homopolarity and compression, and the fixed attenuation rate is not particularly required. That is, the individual frequency components may be provided with arbitrary different attenuation rates.

The electronic watermarking information is embedded, for example, in about 100 second frequency components of the 1,024 frequency components.

In addition, this embodiment illustrates the case where the frequency level obtained by attenuating the level of the first frequency component is added to the level of the second frequency component offset from the first frequency component by four frequency components on the frequency axis to embed the electronic watermarking information, as described above. However, the distance on the frequency axis between the first frequency component and the second frequency component is not limited to 4.

In addition, the electronic watermarking information S52 is embedded in the audio signal S51 using as a unit, a module comprising a predetermined number of samples constituting the audio signal S51; the electronic watermarking information S52 may be embedded all over the audio signal S51 or in part thereof.

In embedding the electronic watermarking information as described above, a masking effect is desirably taken into consideration.

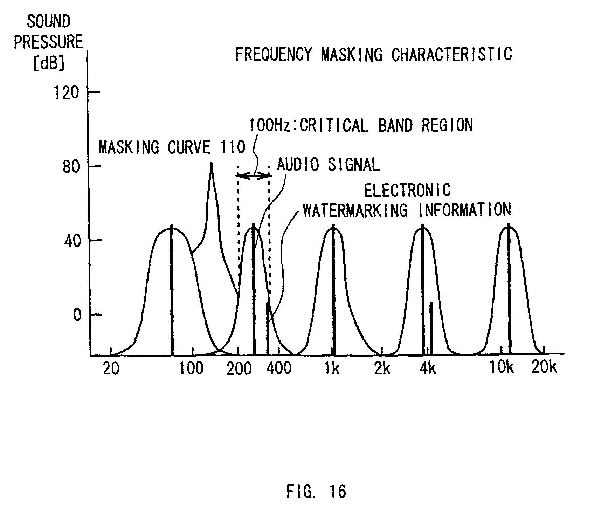

The masking effect is such that if, for example, the frequency is indicated on the axis of abscissas using a logarithmic scale while the sound pressure (amplitude) level is indicated on the axis of ordinates as shown in Figure 16, the human auditory sense does not react to sounds below a masking curve 110. In this case, as seen in the masking curve 110 shown in Figure 16, the human auditory sense does not react to low sounds within a critical band area of width 100 Hz near a certain loud sound. Thus, when the electronic watermarking information is embedded in a frequency component within the critical band area while controlling the ratio used by the above described coefficient shifting and attenuating circuit 93 to attenuate the level of the first frequency component so that the sound pressure level is lower than the masking curve 110, this prevents degradation of the quality of the audio signal which may result from the embedding of the electronic watermarking information.

In addition, in embedding the electronic watermarking information as described above, the tolerance of the electronic watermarking information signal to the signal compression executed by the MP3 encoder 5 shown in Figure 13 is desirably taken into account.

That is, as described above, the nonlinear quantization Huffman encoding circuit 67 in the MP3 encoder 5 carries out quantization and frequency components with low sound pressure levels may be lost due to a quantization error during a bit reduction process involved in the quantization process.

Therefore, to embed electronic watermarking information that sufficiently tolerates compression, in an audio signal, the ratio used by the above described coefficient shifting and attenuating circuit 93 to attenuate the level of the first frequency component is desirably controlled so that electronic watermarking information is embedded which has as high a sound pressure level as possible within the range of sound pressure levels indicated by the masking curve 110.

### [MP3 Recorders 138₁ to 138ₙ]

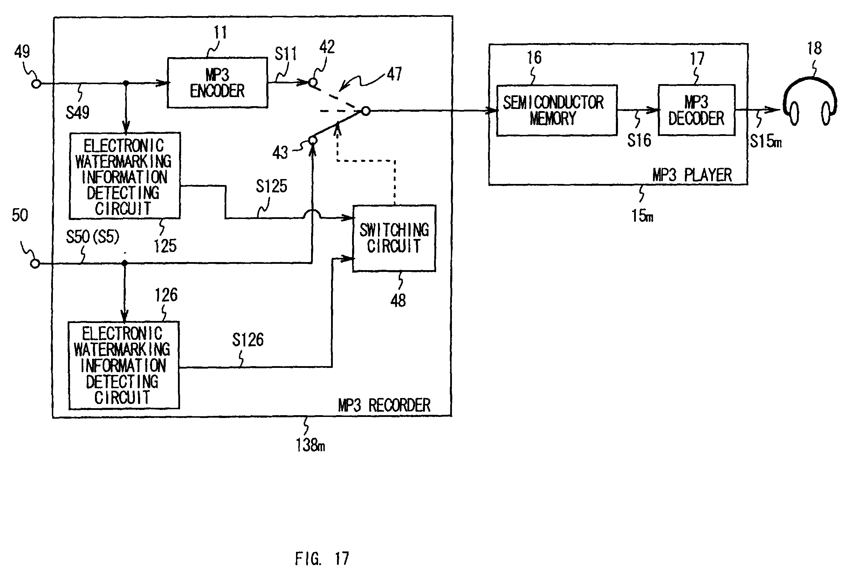

Figure 17 shows a block diagram of the MP3 recorder 138ₘ shown in Figure 13.

As shown in Figure 17, the MP3 recorder 138ₘ has the MP3 encoder 11, the switch 47, the switching circuit 48, and electronic watermarking information detecting circuits 125 and 126.

As shown in Figure 17, the MP3 recorder 138ₘ has the same configuration as the MP3 recorder 38ₘ shown in Figure 6 except for the configuration of the electronic watermarking information detecting circuits 125 and 126.

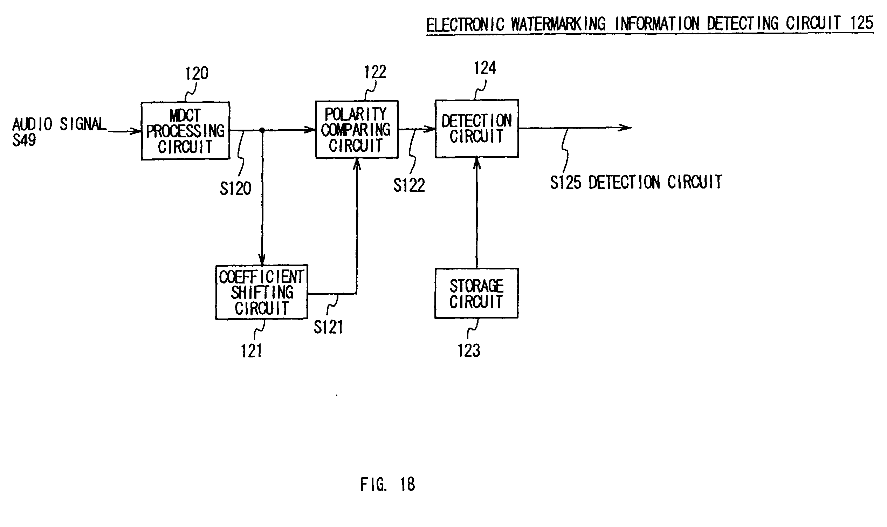

Figure 18 is a block diagram of the electronic watermarking information detecting circuit 125.

As shown in Figure 18, the electronic watermarking information detecting circuit 125 has an MDCT processing circuit 120, a coefficient shifting circuit 121, a polarity comparing circuit 122, a storage circuit 123, and a detection circuit 124.

The MDCT processing circuit 120 uses data for 1,024 samples as one unit to carry out an MDCT process for the audio signal S49 input from the terminal 49 shown in Figure 17. The MDCT processing circuit 120 thus generates an MDCT coefficient for the 1,024 frequency components to output this MDCT coefficient 120 to the coefficient shifting circuit 121 and the polarity comparing circuit 122.

The coefficient shifting circuit 121 uses the MDCT coefficient 120 to shift a predetermined first frequency component in which electronic watermarking information is to be detected, by, for example, four frequency components in a direction in which the frequency increases to obtain an MDCT coefficient S121, which is then output to the polarity comparing circuit 122.

Based on the MDCT coefficient S120 input from the MDCT processing circuit 120 and the MDCT coefficient S121 input from the coefficient shifting circuit 121, the polarity comparing circuit 122 compares the predetermined first frequency component in which electronic watermarking information is to be detected with the second frequency component offset from the first frequency component by four frequency components in the direction in which the frequency increases, to generate a comparison signal S122 indicating a result of the comparison.

In this case, the polarity comparing circuit 122 uses the MDCT coefficients S120 and S121 to determine the levels of the first and second frequency components in order to detect one of sets of the first frequency component and the second frequency component corresponding to this first frequency component in which both the first and second frequency components have such a level that they are not lost despite a quantization error during the compression process carried out by the MP3 encoder 5 shown in Figure 13. The polarity comparing circuit 122 compares the first frequency component of this set with the corresponding second frequency component thereof for polarity to generate a comparison signal S122a.

Further, the polarity comparing circuit 122 detect one of the sets of the first frequency component and the second frequency component corresponding to this first frequency component in which at least one of the first and second frequency components have such a level that it is lost because of a quantization error during the compression process carried out by the MP3 encoder 5 shown in Figure 13. The polarity comparing circuit 122 compares the first frequency component of this set with the corresponding second frequency component thereof for polarity to generate a comparison signal S122b.

The storage circuit 123 stores a first reference accumulated value used as a reference in determining whether electronic watermarking information has been embedded in the audio signal and a second reference accumulated value used as a reference in determining whether the audio signal has been compressed as described above.

The first reference accumulated value corresponds, for example, to 80% of the number of those of the frequency components with electronic watermarking information embedded therein which have such a level that they are not lost despite the compression process. The second reference accumulated value corresponds, for example, to 20% of the number of those of the frequency components with electronic watermarking information embedded therein which have such a level that they are lost because of the compression process.

For sets of the first and second frequency components in which both frequency components have such a level that they are not lost despite a quantization error during the compression process executed by the MP3 encoder 5, the detection circuit 124 calculates, based on the comparison signal S122a, a first accumulated value indicating the number of sets in which the first and second frequency components are homopolar.

The detection circuit 124 determines that electronic watermarking information has been embedded in the audio signal S49, if the first accumulated value is equal to or larger than the first reference accumulated value read from the storage circuit 123.

Alternatively, for sets of the first and second frequency components in which at least one of the frequency components have such a level that it is lost due to a quantization error during the compression process executed by the MP3 encoder 5, the detection circuit 124 calculates, based on the comparison signal S122b, a second accumulated value indicating the number of sets in which the first and second frequency components are homopolar.

The detection circuit 124 determines that the audio signal S49 has been compressed, if the second accumulated value is equal to or smaller than the second reference accumulated value read from the storage circuit 123.

In this case, the second accumulated value is substantially zero, since the frequency component is lost if the audio signal S49 has been compressed.

Upon determining that the audio signal S49 has electronic watermarking information embedded therein and has also been compressed, the detection circuit 124 outputs a detection signal S125 indicating that copying is disabled, to the switching circuit 48 shown in Figure 17.

Alternatively, upon determining that the audio signal S49 has never been compressed and/or has no electronic watermarking information embedded therein, the detection circuit 124 outputs a detection signal S125 indicating that copying is enabled, to the switching circuit 48 shown in Figure 17.

The processing executed by the switching circuit 48 based on the detection signal S125 is the same as in the above described first embodiment.

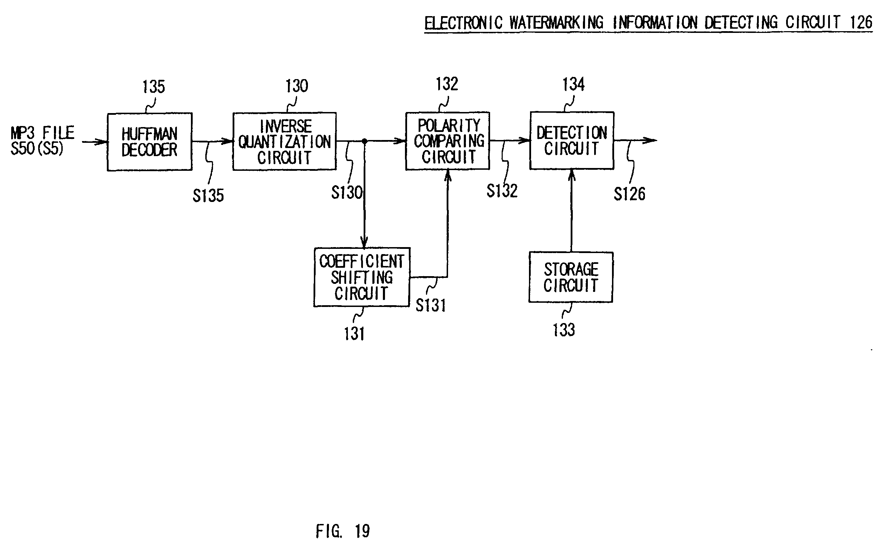

Figure 19 is a block diagram of the electronic watermarking information detecting circuit 126.

As shown in Figure 19, the electronic watermarking information detecting circuit 126 has a Huffman decoder 135, an inverse quantization circuit 130, a coefficient shifting circuit 131, a polarity comparing circuit 132, a storage circuit 133, and a detection circuit 134.

The Huffman decoder 135 Huffman-decodes the MP3 file S50 (S5) input from the terminal 50 shown in Figure 17 to generate decoded data S135, which are then output to the inverse quantization circuit 130.

The inverse quantization circuit 130 inversely quantizes the decoded data S135 to generate an MDCT coefficient S130 using 1,024 frequency components as one unit and outputs the MDCT coefficient S130 to the coefficient shifting circuit 131 and the polarity comparing circuit 132.

The coefficient shifting circuit 131 uses the MDCT coefficient S130 to shift a predetermined first frequency component in which electronic watermarking information is to be detected, by, for example, four frequency components in a direction in which the frequency increases to obtain an MDCT coefficient S131, which is then output to the polarity comparing circuit 132.

Based on the MDCT coefficient S130 input from the MDCT processing circuit 130 and the MDCT coefficient S131 input from the coefficient shifting circuit 131, the polarity comparing circuit 132 compares the predetermined first frequency component in which electronic watermarking information is to be detected with the second frequency component offset from the first frequency component by four frequency components in the direction in which the frequency increases, to generate a comparison signal S132 indicating a result of the comparison.

The storage circuit 133 stores a first reference accumulated value used as a reference in determining whether electronic watermarking information has been embedded in the audio signal. As described above, the first reference accumulated value corresponds, for example, to 80% of the number of those of the frequency components with electronic watermarking information embedded therein which have such a level that they are not lost despite the compression process.

For sets of the first and second frequency components in which both frequency components have such a level that they are not lost despite a quantization error during the compression process executed by the MP3 encoder 5, the detection circuit 134 calculates, based on the comparison signal S132, a first accumulated value indicating the number of sets in which the first and second frequency components are homopolar.

The detection circuit 134 determines that electronic watermarking information has been embedded in the MP3 file S50 (S5), if the first accumulated value is equal to or larger than the first reference accumulated value read from the storage circuit 133.

The processing executed by the switching circuit 48 based on the detection signal S126 is the same as in the above described first embodiment.

The music distributing system 100 has the same operational form as the music distributing system 30 according to the above described embodiment 1 except for the above described processing executed by the electronic watermarking information embedding device 91 and the MP3 recorder 138ₘ.

The music distributing system 100 provides effects similar to those provided by the music distributing system 30 according to the above described first embodiment.

### Variation of the Second Embodiment

The above described second embodiment illustrates the case where the coefficient shifting and attenuating circuit 93 shown in Figure 14 and included in the electronic watermarking information embedding device 91 in Figure 13 uses the MDCT coefficient M92 to execute the process corresponding to attenuating, at the fixed ratio, the frequency component in which electronic watermarking information has been determined to be embedded and then shifting the attenuated frequency component by, for example, four frequency components in the direction in which the frequency increases.

In contrast, according to this variation, the coefficient shifting and attenuating circuit 93 adds frequency levels obtained by attenuating or amplifying the levels of plural first frequency components, to second frequency components each offset from the corresponding first frequency component by four frequency components on the frequency axis.

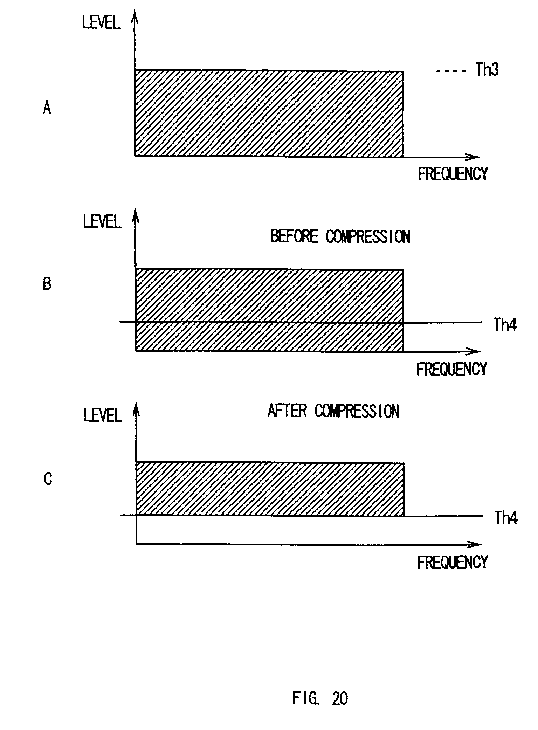

In this case, for predetermined third frequency components of the first frequency components, the coefficient shifting and attenuating circuit 93 determines such a ratio at which each third frequency component is to be attenuated or amplified that the level of the corresponding second frequency component becomes, after the addition, equal to or lower than a threshold value Th3, shown in Figure 20A, and equal to or larger than a threshold value Th4, shown in Figure 20B.

In this case, frequency components at a level equal to or higher than the threshold Th4 are prevented from being lost despite a quantization error during the compression process executed by the MP3 encoder 5 shown in Figure 13. On the other hand, frequency components at a level lower than the threshold Th4 are lost due to a quantization error during the compression process executed by the MP3 encoder 5 shown in Figure 13.

For predetermined fourth frequency components of the first frequency components, the coefficient shifting and attenuating circuit 93 determines such a ratio at which each fourth frequency component is to be attenuated or amplified that the level of the corresponding second frequency component becomes, after the addition, equal to or lower than the threshold value Th3 shown in Figure 20A and smaller than the threshold value Th4 shown in Figure 20B.

Electronic watermarking information with a high compression tolerance has been embedded in the portion of the set of second frequency components to which the third frequency components correspond, while electronic watermarking information with a low compression tolerance has been embedded in the portion of the set of second frequency components to which the fourth frequency components correspond.

In the example shown in Figure 20, the third and fourth frequency components are mixed together on the frequency axis.

On the other hand, in the electronic watermarking information detecting circuit 125 and 126 shown in Figure 17, when the detection circuit 124 shown in Figure 18 and the detection circuit 134 shown in Figure 19, respectively, set "0" for an initial value for the third frequency component having electronic watermarking information with a high compression tolerance embedded therein and then calculates an accumulated value by adding "1" to the initial value if the comparison signals S122a and S132 indicate a matched polarity, the accumulated value is a predetermined value or higher irrespective of whether or not the audio signal has been compressed because the electronic watermarking information with a high compression tolerance is not lost despite the compression as shown in Figures 20B and 20C. Therefore, by determining the accumulated value for the third frequency component, it can be detected whether or not the audio signal has electronic watermarking information embedded therein.

In addition, in the electronic watermarking information detecting circuit 125 shown in Figure 17, when the detection circuit 124 shown in Figure 18 sets "0" for an initial value for the fourth frequency component having electronic watermarking information with a low compression tolerance embedded therein and then calculates an accumulated value by adding "1" to the initial value if the comparison signal S122b indicates a matched polarity, the accumulated value is equal or close to zero if the audio signal has been compressed whereas it is equal to or larger than a predetermined value if the signal has never been compressed, because the electronic watermarking information with a low compression tolerance is lost due to the compression as shown in Figure 20C. Therefore, by determining the accumulated value for the fourth frequency component, it can be detected whether or not the audio signal S49 has been compressed.

If the detection circuits 124 and 134 of the electronic watermarking information detecting circuits 125 and 126 determine that the audio signal has electronic watermarking information embedded therein and has been compressed, the detection circuits 124 and 134 output the detection signals S125 and S126 indicating that copying is disabled, to the switching circuit 48 shown in Figure 17. Otherwise, the detection circuits 124 and 134 output the detection signals S125 and S126 to the switching circuit 48 indicating that copying is disabled.

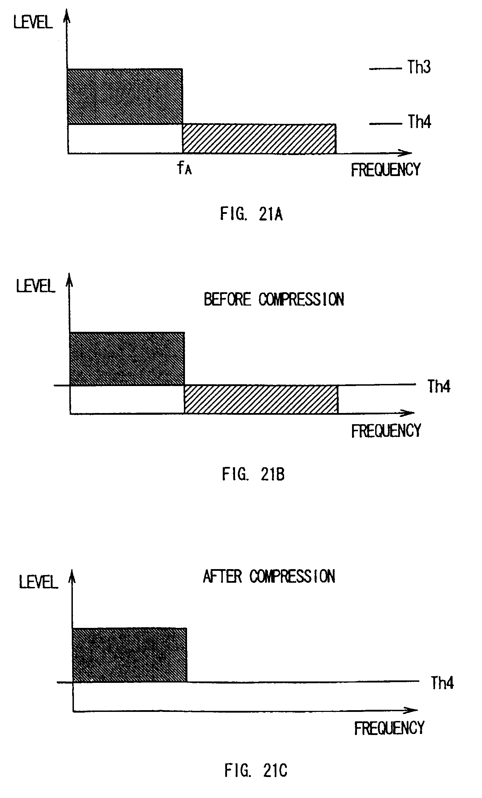

In another variation, the coefficient shifting and attenuating circuit 93 shown in Figure 14 and included in the electronic watermarking information embedding device 91 in Figure 13 may assign the third frequency components with a high compression tolerance as frequency f_{A} and lower frequencies and the third frequency components with a low compression tolerance as frequencies higher than the frequency f_{A} as shown in Figure 21A.

In this case, if the audio signal S49 and MP3 file S50 have not been compressed, both the third and fourth frequency components remain in the pattern shown in Figure 21B. If, however, the audio signal S49 and MP3 file S50 have been compressed, only the third frequency components with a high compression tolerance assigned as the frequency f_{A} and lower frequencies remain as shown in Figure 21C. Based on this, the electronic watermarking information detecting circuit 125 shown in Figure 17 can determine whether or not the audio signal has electronic watermarking information embedded therein and has been compressed, while the electronic watermarking information detecting circuit 126 can determine whether or not the audio signal has electronic watermarking information embedded therein.

Electronic watermarking information may be embedded so that the third and fourth frequency components are nested. Alternatively, in each of the above described second embodiment and its variations, use control information for the audio signal and/or information on the audio signal can be added to the electronic watermarking information as described in the first embodiment.

The present invention is not limited to the above described embodiments.

For example, in the above described example explained with Figures 20 and 21, the electronic watermarking information embedding device 91 attenuates or amplifies the level of the first frequency component and adds the attenuated or amplified level to the second frequency component to generate the plurality of third frequency components having a level at which they are not lost despite the compression and the fourth frequency component having a level at which they are lost because of the compression. However, a predetermined level of the first frequency component is replaced with a level at which the frequency component is not lost despite the compression while a predetermined level of the second frequency component is replaced with a level at which the frequency component is lost because of the compression before electronic watermarking information is embedded.

In addition, in the above described embodiments, the MP3 is illustrated as means for compressing the digital signal, but the MPEG AAC (Advanced Audio Coding), the ATRAC3 (trade mark: Adaptive TRansform Acoustic Coding), or the like can of course be used; the method for compressing the digital signal is not particularly limited. Additionally, in the description of the above described embodiments, the audio signal has been taken by way of example, but the present invention is applicable to processing of image signals for still or animated images or other digital signals.

As described above, according to the signal processing apparatus and method of the present invention, it can be detected whether or not the digital signal with the electronic watermarking information embedded therein has been compressed.

As described above, according to the signal processing apparatus and method of the present invention, if a digital signal with electronic watermarking information embedded therein is compressed, the digital signal can be prohibited from being recorded in a memory of a reproduction apparatus, thereby effectively avoiding infringement of the copy right.

Additionally, according to the signal processing apparatus and method of the present invention, electronic watermarking information can be embedded in a digital signal so that it can be detected whether or not the digital signal with the electronic watermarking information embedded therein has been compressed.

### Industrial Applicability

The present invention is a digital signal system that is effective in protecting copy rights and that is applicable to, for example, electronic watermarking devices for music distributing systems for distributing music contents via a network or for video distributing systems for distributing still or animated images.

## Claims

1. A signal processing apparatus for detecting whether or not a digital signal has been subjected to a compression process, the signal processing apparatus being characterized by comprising:
storage means for storing a first amount of information used as a reference for detecting whether or not a digital signal with electronic watermarking information embedded therein has been subjected to said compression process, the first amount of information being the amount of the electronic watermarking information;
extraction means for extracting the electronic watermarking information contained in digital signal to be detected; and
detection means for detecting a second amount of information that is said amount of the electronic watermarking information extracted and comparing said first amount of information with said second amount of information to detect whether or not said digital signal to be detected has been subjected to the compression process.

2. The signal processing apparatus according to Claim 1, characterized in that:
said storage means stores as said first amount of information, the amount of information in electronic watermarking information that has not been subjected to said compression process, and
said detection means calculates a remaining rate of said extracted electronic watermarking information from said first and second amounts of information to detect based on the remaining rate whether or not said digital signal to be detected has been subjected to the compression process.

3. The signal processing apparatus according to Claim 2, characterized in that:
said storage means further stores a first threshold value used as a reference for detecting whether the digital signal has been subjected to the compression process and a second threshold value used as a reference for detecting whether the digital signal has said electronic watermarking information embedded therein, and
if said detection means determines that said remaining rate indicates a value between said first threshold value and said second threshold value, said detection means detects that said digital signal to be detected has been subjected to the compression process and that the digital signal has said electronic watermarking information embedded therein.

4. The signal processing apparatus according to Claim 1, characterized in that:
said extraction means comprises:
orthogonal conversion means for converting said digital signal to be detected from a time domain to a frequency domain; and
filter means for filtering, based on a result of said conversion, said digital signal to be detected to extract said electronic watermarking information.

5. The signal processing apparatus according to Claim 1, characterized in that:
said digital signal is an audio signal, an image signal for a still image, or an image signal for an animated image.

6. The signal processing apparatus for detecting whether or not a digital signal has been subjected to a compression process, the signal processing apparatus being characterized by comprising:
comparison means for determining a level and a polarity of a predetermined frequency component with electronic watermarking information embedded therein, based on a conversion factor for a frequency domain of said digital signal;
storage means for storing a third threshold value used as a reference for detecting whether or not said digital signal has been subjected to the compression process; and
detection means for detecting, based on a result of said comparison means and said third threshold value, whether said digital signal has been subjected to the compression process.

7. The signal processing apparatus according to Claim 6, characterized in that:
said comparison means detects, based on said conversion factor, one of plural sets of a predetermined first frequency component and a second frequency component offset from the first frequency component by a predetermined distance on a frequency axis in which at least one of the frequency components has a level at which it is lost due to said compression process, and compares a polarity of said first frequency component of the detected set with a polarity of said corresponding second frequency component thereof, and
said detection means compares, based on a result obtained by said comparison means, a rate of sets having a matched polarity with said third threshold value, to detect whether or not said digital signal has been subjected to the compression process.

8. The signal processing apparatus according to Claim 7, characterized in that:
if said set in which at least one of said first frequency component and said second frequency component corresponding to the first frequency component has a level at which it is lost due to said compression process has already been determined,
said comparison means compares the polarity of said first frequency component of said predetermined set with the polarity of said second frequency component thereof corresponding to the first frequency component.

9. The signal processing apparatus according to Claim 6, characterized in that:
said storage means stores a fourth threshold value used as a reference for detecting whether or not said digital signal has electronic watermarking information embedded therein,
said comparison means detects, based on said conversion factor, one of plural sets of a predetermined first frequency component and a second frequency component offset from the first frequency component by a predetermined distance on a frequency axis in which both frequency components have a level at which they are not lost despite the compression process, and compares a polarity of said first frequency component of the detected set with said corresponding second frequency component thereof, and
said detection means compares, based on a result obtained by said comparison means, a rate of sets having a matched polarity with said fourth threshold value, to detect whether said digital signal has the electronic watermarking information embedded therein.

10. The signal processing apparatus according to Claim 9, characterized in that:
if said set in which both said first frequency component and said second frequency component corresponding to the first frequency component have a level at which they are not lost despite said compression process has already been determined,
said comparison means compares the polarity of said first frequency component of said predetermined set with the polarity of said second frequency component thereof corresponding to the first frequency component.

11. The signal processing apparatus according to Claim 6, characterized by comprising:
orthogonal conversion means for converting, if said digital signal is for the time domain, said digital signal into a signal for the frequency domain to generate said conversion factor.

12. A signal processing apparatus for controlling a write of a compressed digital signal to a memory in a reproduction device, the signal processing apparatus being characterized by comprising:
electronic watermarking information detecting means for detecting electronic watermarking information contained in said digital signal to determine whether or not to write the digital signal to the memory in said reproduction device, and
control means for controlling a write of said digital signal to the memory in said reproduction device based on determination by said electronic watermarking detecting means,
said electronic watermarking information detecting means including:
first storage means for storing a first amount of information used as a reference for detecting whether or not a digital signal with electronic watermarking information embedded therein has been subjected to said compression process, the first amount of information being the amount of the electronic watermarking information;
extraction means for extracting the electronic watermarking information contained in said digital signal; and
detection means for detecting a second amount of information that is said amount of the electronic watermarking information extracted, comparing said first amount of information with said second amount of information to detect whether or not said digital signal has been subjected to the compression process, and determining not to write said digital signal to the memory in said reproduction device if the digital signal has been determined to have been subjected to said compression process.

13. The signal processing apparatus according to Claim 12, characterized in that said electronic watermark detecting means detects electronic watermark information contained in said digital signal to determine use control information indicated by the electronic watermark information, and
said control means controls whether or not to write said digital to the memory in said reproduction device based on a result of the detection of whether or not said digital signal has been subjected to the compression process and on said use control information.

14. The signal processing apparatus according to Claim 12, characterized in that:
said first storage means stores as said first amount of information, the amount of information in electronic watermarking information that has not been subjected to said compression process, and
said detection means calculates a remaining rate of said extracted electronic watermarking information from said first and second amounts of information to detect based on the remaining rate whether or not said digital signal to be detected has been subjected to the compression process.

15. The signal processing apparatus according to Claim 14, characterized in that:
said first storage means further stores a first threshold value used as a reference for detecting whether the digital signal has been subjected to the compression process and a second threshold value used as a reference for detecting whether the digital signal has said electronic watermarking information embedded therein, and
if said detection means determines that said remaining rate indicates a value between said first threshold value and said second threshold value, said detection means detects that said digital signal to be detected has been subjected to the compression process and that the digital signal has said electronic watermarking information embedded therein, and determines not to write said digital signal to the memory in said reproduction device.

16. The signal processing apparatus according to Claim 12, characterized in that:
said extraction means comprises:
orthogonal conversion means for converting said digital signal to be detected from a time domain to a frequency domain; and
filter means for filtering, based on a result of said conversion, said digital signal to be detected to extract said electronic watermarking information.

17. The signal processing apparatus according to Claim 12, characterized in that:
said digital signal is an audio signal, an image signal for a still image, or an image signal for an animated image.

18. A signal processing apparatus for controlling a write of a compressed digital signal to a memory in a reproduction device, the signal processing apparatus comprising:
electronic watermarking information detecting means for detecting electronic watermarking information contained in said digital signal to determine whether or not to write the digital signal to the memory in said reproduction device, and
control means for controlling a write of said digital signal to the memory in said reproduction device based on determination by said electronic watermarking detecting means,
said electronic watermarking information detecting means including:
comparison means for determining a level and a polarity of a predetermined frequency component with electronic watermarking information embedded therein, based on a conversion factor for a frequency domain of said digital signal;
first storage means for storing a third threshold value used as a reference for detecting whether or not said digital signal has been subjected to the compression process; and
detection means for detecting, based on a result of said comparison means and said third threshold value, whether said digital signal has been subjected to the compression process, and determining not to write said digital signal to the memory in said reproduction device if the digital signal has been determined to have been subjected to said compression process.

19. The signal processing apparatus according to Claim 18, characterized in that said electronic watermark detecting means detects electronic watermark information contained in said digital signal to determine use control information indicated by the electronic watermark information, and
said control means controls whether or not to write said digital to the memory in said reproduction device based on a result of the detection of whether or not said digital signal has been subjected to the compression process and on said use control information.

20. The signal processing apparatus according to Claim 18, characterized in that:
said comparison means detects, based on said conversion factor, one of plural sets of a predetermined first frequency component and a second frequency component offset from the first frequency component by a predetermined distance on a frequency axis in which at least one of the frequency components has a level at which it is lost due to said compression process, and compares a polarity of said first frequency component of the detected set with a polarity of said corresponding second frequency component thereof, and
said detection means compares, based on a result obtained by said comparison means, a rate of sets having a matched polarity with said third threshold value, to detect whether or not said digital signal has been subjected to the compression process.

21. The signal processing apparatus according to Claim 20, characterized in that:
if said set in which at least one of said first frequency component and said second frequency component corresponding to the first frequency component has a level at which it is lost due to said compression process has already been determined,
said comparison means compares the polarity of said first frequency component of said predetermined set with the polarity of said second frequency component thereof corresponding to the first frequency component.

22. The signal processing apparatus according to Claim 18, characterized in that:
said storage means stores a fourth threshold value used as a reference for detecting whether or not said digital signal has electronic watermarking information embedded therein,
said comparison means detects, based on said conversion factor, one of plural sets of a predetermined first frequency component and a second frequency component offset from the first frequency component by a predetermined distance on a frequency axis in which both frequency components have a level at which they are not lost despite the compression process, and compares a polarity of said first frequency component of the detected set with said corresponding second frequency component thereof, and
said detection means compares, based on a result obtained by said comparison means, a rate of sets having a matched polarity with said fourth threshold value, to detect whether said digital signal has the electronic watermarking information embedded therein.

23. The signal processing apparatus according to Claim 22, characterized in that:
if said set in which both said first frequency component and said second frequency component corresponding to the first frequency component have a level at which they are not lost despite said compression process has already been determined,
said comparison means compares the polarity of said first frequency component of said predetermined set with the polarity of said second frequency component thereof corresponding to the first frequency component.

24. The signal processing apparatus according to Claim 18, characterized by comprising:
orthogonal conversion means for converting, if said digital signal is for the time domain, said digital signal into a signal for the frequency domain to generate said conversion factor.

25. A signal embedding device for embedding electronic watermarking information in a digital signal, the signal embedding device being characterized by comprising:
orthogonal conversion means for converting the digital signal from a time domain to a frequency domain;
signal embedding means for embedding said electronic watermarking information in said digital signal in said frequency domain; and
output means for outputting the digital signal with said electronic watermark embedded therein,
said signal embedding means embedding said electronic watermarking information in said digital signal so that a predetermined or more amount of electronic watermarking information is lost when said digital signal is compressed.

26. The signal embedding device according to Claim 25, characterized in that:
said signal embedding means comprises:
orthogonal conversion means for converting a digital signal for the time domain into a signal for the frequency domain;
spectrum spreading means for spectrum-spreading said electronic watermark information;
filter means for filtering said spectrum-spread electronic watermarking information; and
addition means for adding said digital signal to said filtered electronic watermarking information.

27. The signal embedding device according to Claim 25, characterized in that:
said embedding means comprises:
orthogonal conversion means for converting a digital signal from the time domain to the frequency domain;
shift addition means for attenuating or amplifying a level of a predetermined frequency component of said signal in said frequency domain to add the attenuated or amplified level to a level of a second frequency component offset from the first frequency component by a predetermined distance on a frequency axis in order to embed electronic watermarking information in said digital signal; and
inverse orthogonal conversion means for converting said digital signal with said electronic watermarking information embedded therein from the frequency domain to the time domain.

28. A signal processing method for detecting whether or not a digital signal has been subjected to a compression process, the signal processing method being characterized by comprising steps of:
extracting electronic watermarking information contained in the digital signal to be detected, the step having storage means for storing a first amount of information used as a reference for detecting whether or not a digital signal with electronic watermarking information embedded therein has been subjected to said compression process, the first amount of information being the amount of the electronic watermarking information; and
detecting a second amount of information that is said amount of the electronic watermarking information extracted and comparing said first amount of information with said second amount of information to detect whether or not said digital signal to be detected has been subjected to the compression process.

29. A signal processing method for detecting whether or not a digital signal has been subjected to a compression process, storage means being provided for storing a third threshold value used as a reference for detecting whether or not said digital signal has been subjected to the compression process, the signal processing method being characterized by comprising:
a comparison step for determining a level and a polarity of a predetermined frequency component with electronic watermarking information embedded therein, based on a conversion factor for a frequency domain of said digital signal; and
a step of detecting, based on a result of said comparison step and said third threshold value, whether or not said digital signal has been subjected to the compression process.

30. A signal processing method for controlling a write of a compressed digital signal to a memory in a reproduction device, the signal processing method being characterized by comprising:
an electronic watermarking information detecting step of detecting electronic watermarking information contained in said digital signal to determine whether or not to write the digital signal to the memory in said reproduction device, and
a control step of controlling a write of said digital signal to the memory in said reproduction device based on determination by said electronic watermarking detecting means,
said electronic watermarking information detecting step including steps of:
extracting the electronic watermarking information contained in said digital signal, the step having first storage means for storing a first amount of information used as a reference for detecting whether or not a digital signal with electronic watermarking information embedded therein has been subjected to said compression process, the first amount of information being the amount of the electronic watermarking information; and
detecting a second amount of information that is said amount of the electronic watermarking information extracted, comparing said first amount of information with said second amount of information to detect whether or not said digital signal has been subjected to the compression process, and determining not to write said digital signal to the memory in said reproduction device if the digital signal has been determined to have been subjected to said compression process.

31. A signal processing apparatus according to Claim 1, characterized in that said electronic watermark detecting step detects electronic watermark information contained in said digital signal to determine use control information indicated by the electronic watermark information, and
said control step controls whether or not to write said digital to the memory in said reproduction device based on a result of the detection of whether or not said digital signal has been subjected to the compression process and on said use control information.

32. A signal processing method for controlling a write of a compressed digital signal to a memory in a reproduction device, the signal processing method being characterized by comprising:
an electronic watermarking information detecting step of detecting electronic watermarking information contained in said digital signal to determine whether or not to write the digital signal to the memory in said reproduction device, and
a control step of controlling a write of said digital signal to the memory in said reproduction device based on determination by said electronic watermarking detecting means,
said electronic watermarking information detecting step including:
a comparison step of determining a level and a polarity of a predetermined frequency component with electronic watermarking information embedded therein, based on a conversion factor for a frequency domain of said digital signal, the comparison step having first storage means for storing a third threshold value used as a reference for detecting whether or not said digital signal has been subjected to the compression process; and
a detection step of detecting, based on a result of said comparison step and said third threshold value, whether said digital signal has been subjected to the compression process, and determining not to write said digital signal to the memory in said reproduction device if the digital signal has been determined to have been subjected to said compression process.

33. A signal processing apparatus according to Claim 32, characterized in that said electronic watermark detecting step detects electronic watermark information contained in said digital signal to determine use control information indicated by the electronic watermark information, and
said control step controls whether or not to write said digital to the memory in said reproduction device based on a result of the detection of whether or not said digital signal has been subjected to the compression process and on said use control information.

34. A signal embedding method for embedding electronic watermarking information in a digital signal, the signal embedding device method characterized by comprising:
an orthogonal conversion step of converting the digital signal from a time domain to a frequency domain;
a signal embedding step of embedding said electronic watermarking information in said digital signal in said frequency domain; and
an output step of outputting the digital signal with said electronic watermark embedded therein,
said signal embedding step embedding said electronic watermarking information in said digital signal so that a predetermined or more amount of electronic watermarking information is lost when said digital is compressed.

35. A recording medium for recording a digital signal with electronic watermarking information embedded therein, the recording medium being characterized in that:
said digital signal is orthogonally converted from a time domain to a frequency domain;
said electronic watermarking information is embedded in said digital signal in said frequency domain; and
said electronic watermarking information is embedded in said digital signal so that a predetermined or more amount of electronic watermarking information is lost when said digital is compressed.
